(19) Europäisches Patentamt
European Patent Office
Office européen des brevets

(11) **EP 3 657 662 B1**

(12) **FASCICULE DE BREVET EUROPEEN**

(45) Date de publication et mention de la délivrance du brevet:
**11.01.2023 Bulletin 2023/02**

(21) Numéro de dépôt: **18306536.6**

(22) Date de dépôt: **21.11.2018**

(51) Classification Internationale des Brevets (IPC):
**H02M 7/493** *(2007.01)*   **H02J 3/38** *(2006.01)*

(52) Classification Coopérative des Brevets (CPC):
**H02M 7/493; H02J 3/38;** H02J 2310/46

(54) **PROCÉDÉ D'ÉQUILIBRAGE D'UNE COMPOSANTE DE LA PUISSANCE FOURNIE PAR DEUX ONDULEURS ALIMENTÉS, RÉSEAU ET VÉHICULE FERROVIAIRE ASSOCIÉS**

AUSGLEICHSVERFAHREN EINER KOMPONENTE DER LEISTUNG, DIE VON ZWEI MIT STROM VERSORGTEN WECHSELRICHTERN ERZEUGT WIRD, ENTSPRECHENDES NETZ UND SCHIENENFAHRZEUG

METHOD FOR BALANCING A COMPONENT OF THE POWER SUPPLIED BY TWO POWERED INVERTERS, ASSOCIATED NETWORK AND RAIL VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**27.05.2020 Bulletin 2020/22**

(73) Titulaire: **SpeedInnov**
**75008 Paris (FR)**

(72) Inventeurs:
• **MELI, Takuefou**
**65000 TARBES (FR)**
• **COLIN, Didier**
**65000 TARBES (FR)**

(74) Mandataire: **Lavoix**
**2, place d'Estienne d'Orves**
**75441 Paris Cedex 09 (FR)**

(56) Documents cités:
**EP-A1- 3 012 941    FR-A1- 2 917 343**

• **LIU PENG ET AL: "Improved droop control of direct paralleled inverters in railway converter applications", 2017 9TH INTERNATIONAL CONFERENCE ON MODELLING, IDENTIFICATION AND CONTROL (ICMIC), IEEE, 10 juillet 2017 (2017-07-10), pages 494-499, XP033332358, DOI: 10.1109/ICMIC.2017.8321694 [extrait le 2018-03-21]**

**Description**

La présente invention concerne un procédé d'équilibrage d'au moins une composante de la puissance fournie par deux convertisseurs, notamment deux onduleurs connectés en parallèle dans un réseau d'alimentation d'un véhicule ferroviaire. La présente invention se rapporte aussi à un réseau d'alimentation d'un véhicule ferroviaire associé ainsi qu'à un véhicule ferroviaire comportant un tel réseau.

Dans le cas d'applications ferroviaires, il est souhaitable de contrôler la puissance fournie par chaque élément d'un réseau, notamment lorsque la fréquence fondamentale du réseau est à changer. Un exemple d'un tel réseau peut être trouvé dans le document FR 2917343 A1.

Pour cela, il est connu de mesurer chaque valeur de fonctionnement de chaque élément, par exemple en courant, en tension et en fréquence et de contrôler la valeur de chacun de manière indépendante.

Il est notamment connu de diviser le réseau d'alimentation en plusieurs sous-réseau, chaque sous-réseau étant alimenté par un seul convertisseur. Toutefois, ce procédé ne permet pas d'optimiser l'équilibrage de puissance.

Une autre solution connue, est d'avoir un réseau d'alimentation unique alimenté par plusieurs convertisseurs. Toutefois, le procédé actuel impose dans ce cas un réseau à fréquence fixe.

Il existe donc un besoin pour un procédé d'équilibrage d'au moins une composante de la puissance fournie par deux convertisseurs, notamment deux onduleurs alimentant en parallèle un réseau d'alimentation d'un véhicule ferroviaire qui soit de mise en oeuvre aisée.

A cet effet, il est proposé un procédé d'équilibrage selon la revendication 1.

Selon des modes de réalisation particuliers, le procédé présente une ou plusieurs des caractéristiques des revendications 2 à 9, prise(s) isolément ou selon toutes les combinaisons techniquement possibles.

Il est également proposé un réseau d'alimentation d'un véhicule ferroviaire selon la revendication 10.

Il est aussi décrit un véhicule ferroviaire alimenté par une caténaire et comportant un réseau auxiliaire d'alimentation, le réseau d'alimentation étant un réseau d'alimentation tel que précédemment décrit.

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un exemple de véhicule ferroviaire alimenté par une caténaire, et
- la figure 2 est un ordinogramme d'un exemple de mise en oeuvre d'un procédé d'équilibrage selon l'invention.

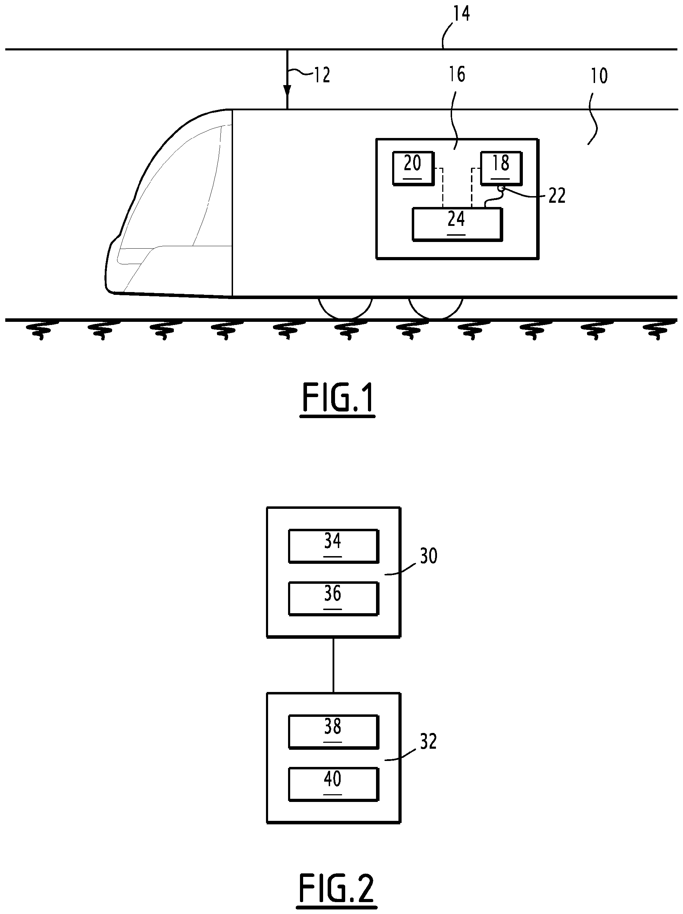

Un véhicule ferroviaire 10 est illustré schématiquement sur la figure 1.

Le véhicule 10 est, par exemple, un métro équipé d'une ventilation de secours, un train ou un tramway.

Le véhicule 10 est alimenté en électricité par l'intermédiaire d'un pantographe 12 qui frotte une caténaire 14 d'alimentation. La caténaire 14 est alimentée en haute tension, c'est-à-dire typiquement une tension continue d'une valeur nominale supérieure ou égale à 600 Vdc Par exemple, dans l'exemple représenté, la tension d'alimentation de la caténaire 14 est égale à 1500 Vdc.

Par le terme « caténaire 14 », il est entendu aussi bien des fils aériens suspendus au-dessus des voies de chemin de fer et permettant d'alimenter le véhicule 10 qu'un troisième rail au sol s'étendant le long des voies de chemin de fer et sur lequel frotte un patin, de manière à alimenter le véhicule 10 en énergie électrique.

Le véhicule 10 comporte un réseau 16 auxiliaire d'alimentation.

Le réseau 16 auxiliaire d'alimentation est un réseau 16 de secours en cas d'interruption de l'alimentation du véhicule 10 par la caténaire. Une telle interruption de l'alimentation est d'origine accidentelle ou provoquée.

Le réseau 16 auxiliaire est un réseau 16 triphasé.

Plus précisément, le réseau 16 auxiliaire comprend trois conducteurs de phases et un conducteur du neutre.

Le réseau 16 auxiliaire s'étend dans plusieurs voitures du véhicule 10. Seule une partie du réseau 16 auxiliaire est visible sur la figure 2.

Le réseau 16 auxiliaire d'alimentation comporte un premier onduleur 18, un deuxième onduleur 20, un capteur de mesure 22 et un contrôleur 24.

Le premier onduleur 18 est un dispositif d'électronique de puissance permettant de générer des tensions et des courants alternatifs à partir d'une source d'énergie électrique de tension ou de fréquence différente.

Le deuxième onduleur 20 assure la même fonction que le premier onduleur 18 à savoir convertir une source d'énergie électrique de tension ou de fréquence différente en tension ou en courant alternatif.

Les deux onduleurs 18 et 20 sont alimentés en parallèle.

Cela signifie que chaque onduleur 18 et 20 est relié à un même bus non représenté.

Par exemple, le bus est propre à transporter une tension de 400 Vdc.

Pour la suite, il est rappelé que la puissance active PA d'un onduleur est définie par la relation suivante :

$$PA = U.I.\cos(\varphi)$$

où :

- I est la valeur efficace du courant triphasé fourni par l'onduleur,
- U est la valeur efficace de la tension triphasée fournie par l'onduleur, et
- φ est la valeur du déphasage entre la composante fondamentale du courant et la composante fondamentale de la tension triphasée.

De façon similaire, la puissance réactive PR est définie par la relation suivante :

$$PR = U.I.\sin(\varphi)$$

Les courants actifs $I_{actif}$ et $I_{réactif}$ sont, respectivement, égaux à $I.\cos(\varphi)$ et à $I.\sin(\varphi)$.

Le capteur de mesure 22 est un capteur propre à mesurer la variation d'une composante du courant fourni par le premier onduleur 18, pour obtenir une variation mesurée.

La composante du courant fourni mesurée est le courant réactif ou le courant actif.

Selon l'exemple de la figure 1, le capteur de mesure 22 est un capteur de courant mesurant à la fois le courant réactif et le courant actif.

Le contrôleur 24 est, par exemple, un processeur.

Le contrôleur 24 est adapté pour équilibrer au moins une composante de la puissance fournie par les deux onduleurs 18 et 20.

Au moins une composante de puissance fournie est la puissance active ou la puissance réactive.

En l'espèce, le contrôleur 24 est adapté pour équilibrer à la fois la puissance active et la puissance réactive fournies par les deux onduleurs 18 et 20.

Le contrôleur 24 est, en outre, adapté pour faire varier une consigne de commande du premier onduleur 18 en fonction de la variation mesurée par le capteur de mesure 22.

Plus précisément, le contrôleur 24 est propre à imposer une consigne de commande en fréquence et une consigne de commande de la tension pour le premier onduleur 18.

Le fonctionnement du réseau 16 auxiliaire d'alimentation et plus spécifiquement du contrôleur 24 est maintenant décrit en référence à la figure 2 qui correspond à un ordinogramme d'un exemple de mise en œuvre d'un procédé d'équilibrage conforme à l'invention.

Le procédé d'équilibrage est un procédé d'équilibrage des deux composantes de la puissance fournie par deux onduleurs, à savoir la puissance active et la puissance réactive.

Comme visible à la figure 2, le procédé comporte une étape de mesure 30 et une étape de modification 32.

Lors de l'étape de mesure 30, il est mesuré la variation d'une composante de courant fourni par le premier onduleur 18.

Dans le cas représenté, le capteur de mesure 22 mesure le courant réactif fourni par le premier onduleur 18 comme l'indique schématiquement la boîte référencée 34 dans la figure 2. Le capteur de mesure 22 mesure également le courant actif fourni par le premier onduleur 18 comme l'indique schématiquement la boîte référencée 36 dans la figure 2.

Il est ainsi obtenu une variation mesurée pour le courant réactif et une variation mesurée pour le courant actif.

Les variations mesurées sont transmises au contrôleur 24.

Lors de l'étape de modification 32, le contrôleur 24 fait varier une consigne de commande du premier onduleur 18. La variation de la consigne de commande est fonction de la variation mesurée.

Plus précisément, pour le cas illustré et comme schématisé par les boîtes dont les numéros de référence sont 38 et 40, la consigne de commande comporte une consigne de commande en fréquence et une consigne de commande de la tension.

La consigne de commande en fréquence se déduit de la variation mesurée pour le courant actif. Autrement formulé, la consigne de commande en fréquence est fonction de la variation mesurée pour le courant actif.

La fonction est une fonction affine de la variation mesurée.

Dans l'exemple proposé, la fonction affine décroît avec la variation mesurée.

Cela s'écrit mathématiquement de la manière suivante :

$$f_{consigne} = f_0 - a.\Delta I_{actif}$$

où :

- $f_{consigne}$ est la valeur de consigne de fréquence appliquée au premier onduleur 18,**conv**
- $f_0$ est la valeur actuelle de la fréquence du premier onduleur 18,
- $a$ est un coefficient de proportionnalité, par exemple égal au rapport calculé entre la variation maximale de fréquence possible pour le premier onduleur 18 et le courant actif nominal, la variation maximale de fréquence possible pour le premier onduleur 18 pouvant dans certains cas être imposée par des contraintes de fonctionnement souhaité pour le réseau 16, et
- $\Delta I_{actif}$ est la variation mesurée de courant actif du premier onduleur 18.

La consigne de commande de tension se déduit de la variation mesurée pour le courant réactif. Autrement formulé, la consigne de commande de tension est fonction de la variation mesurée pour le courant réactif.

La fonction est une fonction affine de la variation mesurée.

Dans l'exemple proposé, la fonction affine décroît avec la variation mesurée. Autrement formulé, la fonction est une fonction décroissante de la variation mesurée qui est également affine.

Cela s'écrit mathématiquement de la manière suivante :

$$V_{consigne} = V_0 - b.\Delta I_{réactif}$$

où :

- $V_{consigne}$ est la valeur de consigne de tension appliquée au premier onduleur 18,
- $V_0$ est la valeur actuelle de la tension du premier onduleur 18,
- $b$ est un coefficient de proportionnalité, par exemple égal au rapport calculé entre la variation maximale de tension possible pour le premier onduleur 18 et le courant réactif nominal, la variation maximale de tension possible pour le premier onduleur 18 pouvant dans certains cas être imposée par des contraintes de fonctionnement souhaité pour le réseau 16, et
- $\Delta I_{réactif}$ est la variation mesurée de courant réactif du premier onduleur 18.

Avantageusement, le contrôleur 24 est propre à imposer une consigne de commande en fréquence et une consigne de commande de la tension pour le deuxième onduleur 20 comme cela est décrit pour le premier onduleur 18 en utilisant un capteur propre à mesurer la variation d'une composante du courant fourni par le deuxième onduleur 20, similaire au capteur 22.

Le procédé repose ainsi sur un principe d'équilibrage de la consommation énergétique contrôlant la divergence du courant.

Plus précisément, pour la régulation du courant actif, pour une puissance active consommée par le réseau 16 fixe, il est souhaité que les deux onduleurs fournissent la même puissance active et soit stable.

Si la puissance active fournie par le premier onduleur 18 est supérieure à la puissance active fournie par le deuxième onduleur 20, il convient que les consignes de fréquence respectives de chacun des deux onduleurs conduisent à une variation de courant actif négative pour le premier onduleur 18 et positive pour le deuxième onduleur 20. Autrement formulé, il convient que la consigne de fréquence du premier onduleur 18 subisse une variation négative et que la consigne de fréquence du deuxième onduleur 20 subisse une variation positive.

Similairement, si la puissance active fournie par le premier onduleur 18 est inférieure à la puissance active fournie par le deuxième onduleur 20, il convient que les consignes de fréquence respectives de chacun des deux onduleurs conduisent à une variation de courant actif positive pour le premier onduleur 18 et négative pour le deuxième onduleur 20. Autrement formulé, il convient que la consigne de fréquence du premier onduleur 18 subisse une variation positive et que la consigne de fréquence du deuxième onduleur 20 subisse une variation négative.

De ce constat, il résulte que la commande de consigne de fréquence est une consigne de fréquence qui diminue lorsque la puissance active fournie augmente et qui augmente lorsque la puissance active fournie diminue.

Par ailleurs, pour la régulation du courant réactif, pour une puissance réactive consommée par le réseau 16 fixe, il est souhaité que les deux onduleurs fournissent la même puissance réactive et soit stable.

Si la puissance réactive fournie par le premier onduleur 18 est supérieure à la puissance réactive fournie par le deuxième onduleur 20, il convient que les consignes de tension respectives de chacun des deux onduleurs conduisent à une variation de courant actif négative pour le premier onduleur 18 et positive pour le deuxième onduleur 20. Autrement formulé, il convient que la consigne de tension du premier onduleur 18 subisse une variation négative et que la consigne de tension du deuxième onduleur 20 subisse une variation positive.

Similairement, si la puissance réactive fournie par le premier onduleur 18 est inférieure à la puissance réactive fournie par le deuxième onduleur 20, il convient que les consignes de tension respectives de chacun des deux onduleurs conduisent à une variation de courant réactif positive pour le premier onduleur 18 et négative pour le deuxième onduleur 20. Autrement formulé, il convient que la consigne de tension du premier onduleur 18 subisse une variation positive et que la consigne de tension du deuxième onduleur 20 subisse une variation négative.

De ce constat, il résulte que la commande de consigne de tension est une consigne de tension qui diminue lorsque la puissance réactive fournie augmente et qui augmente lorsque la puissance réactive fournie diminue.

En résumé, le procédé permet un équilibrage des onduleurs alimentés en parallèle.

En complément, ce mécanisme fonctionne pour n'importe quelle fréquence fondamentale nominale et n'importe quelle tension nominale.

Ce procédé permet également de faire varier la fréquence fondamentale du réseau tout en conservant les onduleurs synchronisés entre eux, c'est-à-dire sans déconnecter électriquement les onduleurs entre eux. Pour parvenir à cela, lorsqu'un changement de consigne de fréquence nominal est détecté par l'algorithme, le ou les onduleurs affectés d'un rôle esclave, tel le premier onduleur, se met(tent) à réguler le courant actif et le courant réactif qu'il(s) fourni(ssen)t sur le réseau en réglant la tension et la fréquence qu'il(s) impos(ent) sur le réseau (pour réguler respectivement le courant réactif et le courant actif), et le seul onduleur affecté du rôle de maitre, tel le deuxième onduleur, fait varier sa fréquence nominale et/ou sa tension nominale.

Le procédé est de mise en œuvre aisée.

En effet, aucun échange d'information entre les deux onduleurs n'est impliqué pour mettre en œuvre le procédé.

Le procédé permet de limiter les pertes de conduction dans les câbles du réseau 16.

Par ailleurs, le procédé permet un dimensionnement optimal de chaque élément du réseau 16, notamment des onduleurs et des câbles.

En outre, comme les onduleurs partagent usuellement de la puissance avec les onduleurs pour la traction du véhicule 10, le procédé permet d'assurer que les onduleurs de traction ne sont pas sous-alimentés de sorte que chaque moteur de traction est bien alimenté.

Un tel procédé est généralisable pour un réseau 16 comportant une pluralité d'onduleurs, chaque onduleur étant alimenté en parallèle.

Avantageusement, le deuxième onduleur 20 est un onduleur maître et le contrôleur 24 est configuré pour recevoir une commande de changement de fréquence et notamment de fréquence fondamentale sur le réseau auxiliaire 16 à une valeur spécifiée et pour faire évoluer une consigne de commande en fréquence du deuxième onduleur 20 linéairement d'une valeur actuelle à la valeur spécifiée.

Le contrôleur 24 est alors propre à commander une consigne de courant du premier onduleur 18, dit onduleur esclave, à partir de l'évolution de la fréquence mesurée en sortie du premier onduleur 18 et d'une mesure du courant au moment où la phase de changement de fréquence est lancée. Plus précisément, le contrôleur 24 est propre à mémoriser/récupérer les valeurs de courant actif et réactif mesurées par le capteur 22 à l'instant où la commande de changement de fréquence a été envoyée au deuxième onduleur 20 et à calculer la consigne de courant en appliquant à ces courants une rampe de progression en fonction de la fréquence mesurée.

Lorsque la fréquence réseau atteint la valeur spécifiée, le contrôleur 24 détecte la fin du mode de changement de fréquence.

Un tel fonctionnement permet de faire varier la fréquence fondamentale du réseau tout en maintenant une synchronisation des deux onduleurs 18, 20.

Avantageusement, le réseau 16 est dépourvu de moyen de communication/ d'échange de données entre le premier onduleur 18 et le deuxième onduleur 20. Plus généralement le premier onduleur 18 est propre à être commandé indépendamment de valeurs électriques relatives au deuxième onduleur 20 et inversement.

Il est également à noter que le procédé peut être mis en œuvre pour deux convertisseurs d'énergie électrique, les onduleurs n'étant qu'un exemple particulier.

De même, le procédé peut s'appliquer pour tout type de véhicule et notamment un véhicule ferroviaire.

## Revendications

1. Procédé d'équilibrage d'au moins une composante de la puissance fournie par un premier et un deuxième convertisseurs d'énergie électrique, notamment deux onduleurs (18, 20), connectés en parallèle dans un réseau (16) d'alimentation d'un véhicule (10), notamment ferroviaire, le réseau (16) d'alimentation étant propre à fonctionner à une fréquence fondamentale, le procédé comportant :

   - une étape de commande de changement de la fréquence fondamentale du réseau (16) d'alimentation,
   - une étape de variation de la consigne en fréquence du deuxième convertisseur (20) en fonction du changement de fréquence fondamentale,
   - une étape de mesure de la variation d'une composante d'un courant fourni par un premier convertisseur (18), pour obtenir une variation mesurée, et
   - une étape de modification d'une consigne de commande du premier convertisseur (18) en fonction de la variation mesurée.

   le réseau (16) d'alimentation comportant un contrôleur (24) et:

   - lors de l'étape de commande de changement de fréquence, le contrôleur (24) reçoit une commande de changement de fréquence et notamment de fréquence fondamentale à une valeur spécifiée,
   - lors de l'étape de variation de la consigne en fréquence du deuxième convertisseur (20), le contrôleur (24) fait évoluer une consigne de commande en fréquence du deuxième onduleur (20) linéairement d'une valeur actuelle à une valeur spécifiée,
   - lors de l'étape de mesure, la variation de la fréquence en sortie du premier convertisseur (18) est mesurée et une mesure du courant est effectuée au moment où une phase de changement de fréquence est lancée, et
   - lors de l'étape de modification de la consigne de commande, le contrôleur (24) commande une consigne de courant du premier onduleur (18) à partir de la variation de la fréquence mesurée en sortie du premier onduleur (18) et de la mesure du courant au moment où la phase de changement de fréquence est lancée.

2. Procédé selon la revendication 1, dans lequel la au moins une composante de puissance fournie est la puissance active ou la puissance réactive.

3. Procédé selon la revendication 1 ou 2, dans lequel à l'étape de mesure, la composante du courant fourni mesurée est le courant réactif ou le courant actif.

**4.** Procédé selon l'une quelconque des revendications 1 à 3, dans lequel la consigne de commande comporte une consigne de commande en fréquence.

**5.** Procédé selon la revendication 4, dans lequel la consigne de commande de la fréquence est une fonction affine de la variation mesurée.

**6.** Procédé selon l'une quelconque des revendications 1 à 5, dans lequel la consigne de commande comporte une consigne de commande de la tension.

**7.** Procédé selon la revendication 6, dans lequel la consigne de commande de la tension est une fonction affine de la variation mesurée.

**8.** Procédé selon la revendication 5 ou 7, dans lequel la fonction affine est une fonction décroissante de la variation mesurée.

**9.** Réseau (16) d'alimentation d'un véhicule (10), notamment ferroviaire, le réseau (16) d'alimentation étant propre à fonctionner selon une fréquence fondamentale et comportant :

    - un premier et un deuxième convertisseurs d'énergie électrique, notamment deux onduleurs (18, 20) connectés en parallèle,
    - un capteur de mesure (22) de la variation d'une composante du courant fourni par un premier convertisseur (18), pour obtenir une variation mesurée, et
    - un contrôleur (24),

le réseau (16) d'alimentation étant adapté pour :.

    - commander un changement de la fréquence fondamentale du réseau (16) d'alimentation,
    - faire varier la consigne en fréquence du deuxième convertisseur (20) en fonction du changement de fréquence fondamentale,
    - mesurer la variation d'une composante d'un courant fourni par un premier convertisseur (18), pour obtenir une variation mesurée, le réseau (16) d'alimentation étant adapté également adapté pour mesurer la variation de la fréquence en sortie du premier convertisseur (18) et effectuer la mesure de courant au moment où une phase de changement de fréquence est lancée, et
    - modifier une consigne de commande du premier convertisseur (18) en fonction de la variation mesurée.

le réseau (16) d'alimentation comportant un contrôleur (24), le contrôleur (24) étant propre à :

    - lors de la commande de changement de fréquence, recevoir une commande de changement de fréquence et notamment de fréquence fondamentale à une valeur spécifiée,
    - lors de la variation de la consigne en fréquence du deuxième convertisseur (20), faire évoluer une consigne de commande en fréquence du deuxième onduleur (20) linéairement d'une valeur actuelle à une valeur spécifiée,
    - lors de la modification de la consigne de commande, commander une consigne de courant du premier onduleur (18) à partir de la variation de la fréquence mesurée en sortie du premier onduleur (18) et de la mesure du courant au moment où la phase de changement de fréquence est lancée.

**10.** Véhicule (10) ferroviaire alimenté par une caténaire (14) et comportant un réseau (16) auxiliaire d'alimentation, le réseau (16) d'alimentation étant un réseau (16) d'alimentation selon la revendication 9.

**Patentansprüche**

**1.** Verfahren zum Ausgleichen mindestens einer Komponente der Leistung, die von einem ersten und einem zweiten Umrichter elektrischer Energie, insbesondere zwei Wechselrichtern (18, 20), geliefert wird, die in einem Versorgungsnetz (16) eines Fahrzeugs (10), insbesondere eines Schienenfahrzeugs, parallel geschaltet sind, wobei das Versorgungsnetz (16) geeignet ist, um mit einer Grundfrequenz betrieben zu werden, das Verfahren umfassend:

    - einen Änderungssteuerschritt der Grundfrequenz des Versorgungsnetzes (16),
    - einen Variationsschritt der Frequenzvorgabe des zweiten Umrichters (20) abhängig von der Änderung der Grundfrequenz,
    - einen Messschritt der Variation einer Komponente eines Stroms, der von einem ersten Umrichter (18) geliefert wird, um eine gemessene Änderung zu erlangen, und
    - einen Modifikationsschritt einer Steuervorgabe für den ersten Umrichter (18) abhängig von der gemessenen Variation,

das Versorgungsnetz (16) umfassend eine Steuerung (24) und:

    - in dem Änderungssteuerschritt empfängt die Steuerung (24) eine Frequenzänderungssteuerung, insbesondere der Grundfrequenz auf einen spezifizierten Wert,
    - in dem Variationsschritt der Frequenzvorgabe des zweiten Umrichters (20) verändert die Steuerung (24) eine Frequenzsteuervorgabe des zweiten Wechselrichters (20) linear von einem aktuellen Wert auf einen spezifizierten Wert,
- in dem Messschritt wird die Variation der Frequenz am Ausgang des ersten Umrichters (18) gemessen und eine Messung des Stroms wird in dem Moment ausgeführt, in dem eine Frequenzänderungsphase eingeleitet wird, und
- in dem Modifikationsschritt der Steuervorgabe steuert die Steuerung (24) eine Stromvorgabe des ersten Wechselrichters (18) anhand der Variation der Frequenz, die am Ausgang des ersten Wechselrichters (18) gemessen wird, und der Messung des Stroms in dem Moment, in dem die Frequenzänderungsphase eingeleitet wird.

2. Verfahren nach Anspruch 1, wobei die mindestens eine gelieferte Leistungskomponente die Wirkleistung oder die Blindleistung ist.

3. Verfahren nach Anspruch 1 oder 2, wobei in dem Messschritt die gemessene Komponente des gelieferten Stroms der Blindstrom oder der Wirkstrom ist.

4. Verfahren nach einem der Ansprüche 1 bis 3, wobei die Steuervorgabe eine Frequenzsteuervorgabe umfasst.

5. Verfahren nach Anspruch 4, wobei die Steuervorgabe der Frequenz eine affine Funktion der gemessenen Variation ist.

6. Verfahren nach einem der Ansprüche 1 bis 5, wobei die Steuervorgabe eine Steuervorgabe der Spannung umfasst.

7. Verfahren nach Anspruch 6, wobei die Steuervorgabe der Spannung eine affine Funktion der gemessenen Variation ist.

8. Verfahren nach Anspruch 5 oder 7, wobei die affine Funktion eine abnehmende Funktion der gemessenen Variation ist.

9. Versorgungsnetz (16) eines Fahrzeugs (10), insbesondere eines Schienenfahrzeugs, wobei das Versorgungsnetz (16) geeignet ist, um gemäß einer Grundfrequenz zu arbeiten, und umfassend:

    - einen ersten und einen zweiten Umrichter elektrischer Energie, insbesondere zwei parallel geschaltete Wechselrichter (18, 20),
    - einen Messsensor (22) der Variation einer Komponente des von einem ersten Umrichter (18) gelieferten Stroms, um eine gemessene Variation zu erlangen, und

    - eine Steuerung (24),

wobei das Versorgungsnetz (16) zu Folgendem angepasst ist.

    - Steuern einer Änderung der Grundfrequenz des Versorgungsnetzes (16),
    - Variieren der Frequenzvorgabe des zweiten Umrichters (20) abhängig von der Änderung der Grundfrequenz,
    - Messen der Variation einer Komponente eines Stroms, der von einem ersten Umrichter (18) geliefert wird, um eine gemessene Variation zu erlangen, wobei das Versorgungsnetz (16) auch angepasst ist, um die Variation der Frequenz am Ausgang des ersten Umrichters (18) zu messen und die Strommessung auszuführen, wenn eine Frequenzänderungsphase eingeleitet wird, und
    - Modifizieren einer Steuervorgabe für den ersten Umrichter (18) abhängig von der gemessenen Variation.

das Versorgungsnetz (16) umfassend eine Steuerung (24), wobei die Steuerung (24) zu Folgendem geeignet ist:

    - bei der Frequenzänderungssteuerung, Empfangen einer Frequenzänderungssteuerung und insbesondere der Grundfrequenz auf einen spezifizierten Wert,
    - bei der Variation der Frequenzvorgabe des zweiten Umrichters (20), Verändern einer Frequenzsteuervorgabe des zweiten Wechselrichters (20) linear von einem aktuellen Wert auf einen spezifizierten Wert,
    - bei der Modifikation der Steuervorgabe, Steuern einer Stromvorgabe des ersten Wechselrichters (18) anhand der Variation der Frequenz, die am Ausgang des ersten Wechselrichters (18) gemessen wird, und der Messung des Stroms in dem Moment, in dem die Frequenzänderungsphase eingeleitet wird.

10. Schienenfahrzeug (10), das von einer Oberleitung (14) gespeist wird und umfassend ein Hilfsversorgungsnetz (16), wobei das Versorgungsnetz (16) ein Versorgungsnetz (16) nach Anspruch 9 ist.

**Claims**

1. A method for balancing at least one component of the power supplied by a first and a second electrical energy converters, notably two inverters (18, 20), connected in parallel in a power grid (16) of a vehicle (10), in particular a railway vehicle, the power grid (16) being configured to operate at a fundamental frequency, the method including:

- a step of commanding a change of the fundamental frequency of the power grid (16),
- a step of varying a frequency setpoint of a second converter (20) as a function of the change of the fundamental frequency;
- a step of measuring the variation of a component of a current supplied by a first converter (18), in order to obtain a measured variation, and
- a step of modifying a command setpoint of the first converter (18) as a function of the measured variation,

the power grid (16) comprising a controller (24) and:

- during the step of commanding the change of the fundamental frequency, the controller (24) receives a command of change of the fundamental frequency and notably the fundamental frequency at a specified value,
- during the step of varying a frequency setpoint of a second converter (20), the controller (24) has the command in frequency of the second inverter (20) evolving linearly from the current value to the specified value,
- during the step of measuring, the variation of the frequency at the output of the first converter (18) is measured and the measuring of the current is carried out at the moment at which the change of the fundamental frequency is launched, and
- during the step of modifying the command setpoint, the controller (24) commands the current setpoint of the first inverter (18) a function of the measured variation of the frequency at the output of the first inverter (18) and of the measured current at the moment at which the change of the fundamental frequency is launched.

2. The method according to claim 1, wherein the at least one supplied power component is the active power or the reactive power.

3. The method according to claim 1, wherein, during the step of measuring, the component of the measured supplied current is the reactive current or the active current.

4. The method according to claim 1, wherein the control setpoint includes a frequency control setpoint.

5. The method according to claim 4, wherein the control setpoint of the frequency is an affine function of the measured variation.

6. The method according to any one of claims 1 to 5, wherein the control setpoint includes a control setpoint of the voltage.

7. The method according to claim 6, wherein the affine function is a decreasing function of the measured variation.

8. The method according to claim 5 or 7, wherein the affine function is a decreasing function of the measured variation.

9. A power grid (16) of a vehicle (10), in particular a railway vehicle, the power grid (16) being configured to operate at a fundamental frequency and including:

- a first and a second electrical energy converters, notably two inverters (18, 20), connected in parallel,
- a sensor (22) for measuring the variation of a component of the current supplied by a first converter (18), to obtain a measured variation, and
- a controller (24),

the power grid (16) being adapted to:

- command a change of the fundamental frequency of the power grid (16),
- vary a frequency setpoint of a second converter (20) as a function of the change of the fundamental frequency;
- measure the variation of a component of a current supplied by a first converter (18), in order to obtain a measured variation, and
- modify a command setpoint of the first converter (18) as a function of the measured variation,

the power grid (16) comprising a controller (24), the controller (24) being adapted to:

- during the step of commanding the change of the fundamental frequency, the controller (24) receives a command of change of the fundamental frequency and notably the fundamental frequency at a specified value,
- during the step of varying a frequency setpoint of a second converter (20), the controller (24) has the command in frequency of the second inverter (20) evolving linearly from the current value to the specified value,
- during the step of measuring, the variation of the frequency at the output of the first converter (18) is measured and the measuring of the current is carried out at the moment at which the change of the fundamental frequency is launched, and
- during the step of modifying the command setpoint, the controller (24) commands the current setpoint of the first inverter (18) a function of the measured variation of the frequency at the output of the first inverter (18) and of the measured current at the moment at which the change of the fundamental frequency is launched.

10. A railway vehicle (10) powered by a catenary (14) and including an auxiliary power grid (16), the power grid (16) being a power grid (16) according to claim 9.

## FIG.1

## FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2917343 A1